# EUROPÄISCHE PATENTSCHRIFT

(11) **EP 3 293 432 B1**
(45) Veröffentlichungstag und Bekanntmachung des Hinweises auf die Patenterteilung: **10.07.2019**
(21) Anmeldenummer: 17189422.3
(22) Anmeldetag: 05.09.2017
(51) Int. Cl.: F16L 58/14, F16L 58/18, F16L 23/028, F16L 23/12

(54) **BAUTEIL MIT ROHRABSCHNITT MIT EMAILLIERTEM BUND**
COMPONENT WITH TUBE SECTION HAVING ENAMELLED COLLAR
COMPOSANT POURVU DE SECTION DE TUYAU DOTÉE DE COLLERETTE ÉMAILLÉE

(30) Priorität: 07.09.2016 CH 11572016
(43) Veröffentlichungstag der Anmeldung: 14.03.2018
(73) Patentinhaber: Estrella AG, 4107 Ettingen (CH)
(72) Erfinder: Boeglin, Francis, 68720 Illfurth (FR)
(74) Vertreter: Bohest AG

(56) Entgegenhaltungen:
- WO-A1-98/38447
- WO-A1-2013/160020
- DE-A1- 3 624 117
- JP-A- H09 152 076
- US-A- 3 284 112
- US-A1- 2004 164 554

## Beschreibung

Die vorliegende Erfindung bezieht sich auf ein Bauteil mit mindestens einem Rohrabschnitt, welcher an seinem Ende einen Bund umfasst, gemäss dem Oberbegriff des unabhängigen Patentanspruchs 1.

In der chemischen Industrie werden Bauteile, wie z.B. Rohre, Behälter, Apparate mit Stutzen, Rührbehälter, Lagertanks und Kolonnen, emailliert, um zu verhindern, dass diese Bauteile bei Kontakt mit hochkorrosiven Produkten, wie zum Beispiel Säuren, beschädigt werden. Die hierzu verwendeten Emails haben im Allgemeinen niedere Abtragungsraten in Säuren und Laugen sowie eine gute Temperaturwechselbeständigkeit und Haftfähigkeit auf Emailträgermaterialien. Das aufgebrachte Email setzt sich meist aus mehreren übereinanderliegenden Emailschichten zusammen. Die inneren Emailschichten des Emails werden Grundemailschichten genannt und zeichnen sich vor allem durch gute Hafteigenschaften mit dem Trägermaterial aus, während die äusseren Emailschichten des Emails Deckemailschichten genannt werden und sich vor allem durch eine gute Korrosionsbeständigkeit auszeichnen. Die Emailschichten können durch Nassauftragverfahren oder Trockenauftragverfahren auf das Trägermaterial, zum Beispiel Stahl, aufgebracht werden. Auf die verschiedenen Auftragverfahren des Emails soll an dieser Stelle nicht im Detail eingegangen werden, da diese Verfahren dem Fachmann bekannt sind.

Um einen Produktfluss zwischen zwei Bauteilen zu ermöglichen, werden diese jeweils mit einem Rohrabschnitt mit Bund versehen und die beiden Bunde werden miteinander verbunden. Die Verbindung der Bunde geschieht durch Aneinanderpressen der Bunde mittels z.B. Losflanschen. Um die Dichteigenschaften einer solchen Verbindung zu verbessern, wird zwischen den Bunden ein Dichtelement angeordnet. Ein solches Dichtelement ist zum Beispiel eine Ringdichtung aus Polytetrafluorethylen (PTFE). Eine äusserst hohe Dichtigkeit der Verbindung zweier Bunde ist vor allem dann gefordert, wenn hochkorrosive Produkte zwischen zwei Bauteilen ausgetauscht werden, da der Austritt solcher Produkte zu Korrosion des Bauteilumfeldes führen könnte. Bauteile und Verbunde von Bauteilen dieser Art sind beispielsweise in der WO 98/38447 A1 oder in der DE 36 24 117 A1 offenbart.

Es hat sich jedoch herausgestellt, dass die Verbindung zweier Bunde, trotz vorhandenem Dichtelement, unter Umständen nicht zufriedenstellende Dichteigenschaften aufweisen kann. Insbesondere hat sich gezeigt, dass der Kontaktbereich zwischen dem Dichtelement und den Bunden oft nicht genügend dicht ist. Zum Beispiel kann Flüssigkeit aufgrund von Kapillareffekten zwischen dem Dichtelement und den Bunden nach aussen gelangen.

Zum Stand der Technik gehören auch Rohre mit Bunden an deren Enden, die Auskleidungen aus Kunststoff anstatt Email aufweisen. Beispielsweise wird durch die WO 2013/160020 A1 ein Messrohr für ein Durchflussmessgerät offenbart, dessen Innenseite mit einer Auskleidung versehen ist, die sich auch auf einen Teil der Stirnseiten der Bunde des Messrohrs erstreckt. Die Auskleidung weist wenigstens eine Dichtlippe auf, welche dazu dient, eine Dichtwirkung zwischen dem Messrohr und einer im eingebauten Zustand an das Messrohr angrenzenden Rohrleitung zu bewirken. Ein zusätzliches ringförmiges Dichtelement ist nicht vorhanden.

Die JP H09/152076 A offenbart Rohre mit Flanschen bzw. Bunden, die mit einer Auskleidung aus Harz versehen sind, die mehrere Rippen aufweist, zwischen denen sich Vertiefungen befinden. Die Rippen dienen dazu, den Dichtungsdruck zu erhöhen. Ein zusätzliches ringförmiges Dichtelement ist nicht gezeigt.

Auch aus der US 2004/0164554 A1 sind Rohrabschnitte mit einer Auskleidung der Bunde aus Kunststoff bekannt. Die Stirnfläche der Auskleidung steht aussen um einen mittleren Bereich herum weiter vor, so dass zusätzliches Kunststoff-Material vorhanden ist, das dann beim Verbinden zweier Bunde in einen Ringspalt um die Auskleidung herum gedrückt wird.

Angesichts der Nachteile der bisher bekannten, oben beschriebenen Bauteile liegt der Erfindung die folgende Aufgabe zugrunde: Zu schaffen ist ein Bauteil der eingangs erwähnten Art, das es ermöglicht, an seinem emaillierten Bund über ein Dichtelement mit einem emaillierten Bund eines anderen Bauteils so verbunden zu werden, dass eine bessere Dichtigkeit zwischen den emaillierten Bunden und dem Dichtelement erreicht wird als bei herkömmlichen Bauteilen.

Diese Aufgabe wird durch das erfindungsgemässe Bauteil und das erfindungsgemässe Verfahren gelöst, wie sie in den unabhängigen Patentansprüchen 1 bzw. 6 definiert sind. Bevorzugte Ausführungsvarianten ergeben sich aus den abhängigen Patentansprüchen.

Das Wesen der Erfindung besteht darin, dass bei einem Bauteil mit mindestens einem Rohrabschnitt, welcher an seinem Ende einen Bund umfasst, wobei der Bund um eine Öffnung des Rohrabschnitts herum eine Stirnfläche aufweist, welche mit Email bedeckt ist, das Email mindestens eine durchgehende, um die Öffnung herum verlaufende Vertiefung aufweist.

Eine um die Öffnung herum verlaufende Vertiefung ermöglicht es, eine vom Email geformte Kontaktfläche in zwei getrennte Teilkontaktflächen zu unterteilen, welche eine geringere Fläche besitzen als ein Email ohne Vertiefung. Dadurch entsteht beim Verbinden des Bauteils mit einem weiteren Bauteil an den Teilkontaktflächen ein höherer Druck als bei einer Kontaktfläche ohne Vertiefung. Dies führt zu einer höheren Dichtigkeit zwischen dem Dichtelement und dem Email der Stirnfläche des Bunds. Ausserdem bilden die Teilkontaktflächen jeweils separate Flüssigkeitsbarrieren, die durch eine Vertiefung voneinander getrennt sind und die Dichtigkeit weiter verbessern. Falls ausnahmsweise doch Produktflüssigkeit die erste Flüssigkeitsbarriere passieren sollte, würde diese Produktflüssigkeit sich in der Vertiefung ansammeln. Die mindestens eine weitere Flüssigkeitsbarriere verhindert ein Weiterfliessen der Produktflüssigkeit. Ein weiterer Vorteil der mindestens einen Vertiefung besteht darin, dass beim Verbinden des Bauteils mit einem weiteren Bauteil das dazwischenliegende Dichtelement teilweise in die mindestens eine Vertiefung gedrückt wird und sich damit verkrallt. Dadurch kann ein Ausblasen des Dichtelements aus dem Bereich zwischen den beiden Bauteilen verhindert werden.

Vorzugsweise weist das Email mindestens zwei konzentrische, um die Öffnung herum verlaufende Vertiefungen auf. Dadurch werden die Dichteigenschaften zwischen dem Dichtelement und dem Bund im Vergleich zu Ausführungsvarianten mit nur einer Vertiefung weiter verbessert. Konzentrisch verlaufende Vertiefungen sind ausserdem vergleichsweise einfach herstellbar.

Mit Vorteil besitzt die mindestens eine Vertiefung eine Tiefe zwischen 0,1 mm und 0,3 mm. Eine solche Vertiefung ist einerseits tief genug, um voneinander getrennte Teilkontaktflächen zu erzeugen und nicht von einem Dichtelement ausgefüllt zu werden, wenn dieses zwischen zwei Bunden zusammengepresst wird. Andererseits ist das verbleibende Email auch unterhalb der mindestens einen Vertiefung noch ausreichend tief.

Vorteilhafterweise umfasst das Email mehrere Emailschichten und ist die mindestens eine Vertiefung in der äussersten Emailschicht ausgebildet und besitzt eine Tiefe, welche einer halben bis ganzen Dicke der äussersten Emailschicht entspricht. Eine Vertiefung, welche nur in der äussersten Emailschicht vorhanden ist, ermöglicht optimale Dichteigenschaften und gleichzeitig einen optimalen Korrosionsschutz für das Bauteil.

Bevorzugt weist der Rohrabschnitt eine Innenseite auf und bedeckt das Email auch mindestens einen Teil dieser Innenseite. Dies erlaubt es, einen Korrosionsschutz nicht nur auf der Stirnfläche des Bunds, sondern gleichzeitig auch auf der Innenseite des Rohrabschnitts zu erreichen.

Verfahrensmässig besteht das Wesen der Erfindung darin, dass bei einem Verfahren zur Herstellung von mindestens einem emaillierten Bund bei einem Bauteil, welches mindestens einen Rohrabschnitt mit einem Bund an seinem Ende umfasst, wobei der Bund um eine Öffnung des Rohrabschnitts herum eine Stirnfläche aufweist, welche mit einem Email versehen wird, das Email mit mindestens einer durchgehenden, um die Öffnung herum verlaufenden Vertiefung ausgebildet wird.

Das erfindungsgemäss Verfahren ermöglicht eine Herstellung von mindestens einem emaillierten Bund mit einer höheren Dichtigkeit zwischen dem emaillierten Bund und einem Dichtelement als beim Stand der Technik.

Vorzugsweise umfasst das Email mehrere Emailschichten und wird die mindestens eine Vertiefung in der äussersten Emailschicht ausgebildet. Dies hat den Vorteil, dass dadurch das Email in seiner Korrosionsschutzfunktion nicht verändert wird und gleichzeitig gute Dichteigenschaften erreicht werden.

Eine vorteilhafte Ausführungsvariante zeichnet sich dadurch aus, dass zum Erzeugen der äussersten Emailschicht mit Vertiefung eine Emailschlicker-Schicht aufgetragen und getrocknet wird, dann in der getrockneten Emailschlicker-Schicht mindestens eine Basis-Vertiefung geformt wird und schliesslich die Emailschlicker-Schicht eingebrannt wird. Da die Emailschlicker-Schicht nur getrocknet und noch nicht gebrannt ist, ermöglicht diese Ausführungsform ein einfaches Ausbilden der Basis-Vertiefung in der Emailschlicker-Schicht.

Diese Basis-Vertiefung bildet nach dem Brennen die gewünschte Vertiefung und weist daher im Wesentlichen die Form der Vertiefung auf, die durch das Brennen nur noch minimal verändert wird.

Eine alternative vorteilhafte Ausführungsvariante zeichnet sich dadurch aus, dass der Bund zunächst mit einer Emailbeschichtung versehen wird, danach in der Emailbeschichtung mindestens eine Basis-Vertiefung erzeugt wird und schliesslich die Emailbeschichtung gebrannt wird. Dies hat den Vorteil, dass die Basis-Vertiefung im Vergleich zum Ausbilden einer Basis-Vertiefung in einer nicht gebrannten Emailschicht mit einer präziseren Form ausgebildet werden kann.

Vorzugsweise wird die mindestens eine Basis-Vertiefung durch Rotation eines Vertiefungswerkzeugs erzeugt, das eine Platte mit mindestens einem an der Platte angebrachten Stift umfasst. Dies erlaubt es, auf einfache Weise eine kreisförmige Basis-Vertiefung auszubilden.

Der mindestens eine Stift ist mit Vorteil federnd gelagert. Dadurch kann die Basis-Vertiefung um die Öffnung herum mit einer gleichbleibenden Tiefe ausgebildet werden, auch wenn das Email nicht ganz eben ist.

Vorteilhafterweise umfasst das Vertiefungswerkzeug ein Führungselement, das während der Rotation am Bauteil anliegt. Dadurch wird erreicht, dass die Basis-Vertiefung mit einer höheren Genauigkeit ausgebildet wird.

In einer alternativen vorteilhaften Ausführungsvariante wird die mindestens eine Basis-Vertiefung durch einen Laser oder ein anderes mechanisches Material-Abtragungs-Gerät erzeugt. Ein Laser hat den Vorteil, die Basis-Vertiefung kontaktfrei ausbilden zu können.

Im Folgenden werden das erfindungsgemässe Bauteil und das erfindungsgemässe Verfahren unter Bezugnahme auf die beigefügten Zeichnungen anhand eines Ausführungsbeispiels detaillierter beschrieben. Es zeigen:
- Fig. 1: - einen Längsschnitt durch einen erfindungsgemässen Rohrabschnitt mit Bund, Email und Vertiefungen;
- Fig. 2: - eine Draufsicht auf den emaillierten Bund von Fig. 1;
- Fig. 3: - eine Vergrösserung eines Teils des emaillierten Rohrabschnitts mit Bund von Fig. 1;
- Fig. 4: - einen Längsschnitt durch zwei miteinander verbundene Bauteile mit dazwischenliegendem Dichtelement;
- Fig. 5: - einen Längsschnitt durch ein Vertiefungswerkzeug und
- Fig. 6: - eine Sicht von unten auf das Vertiefungswerkzeug von Fig. 5.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

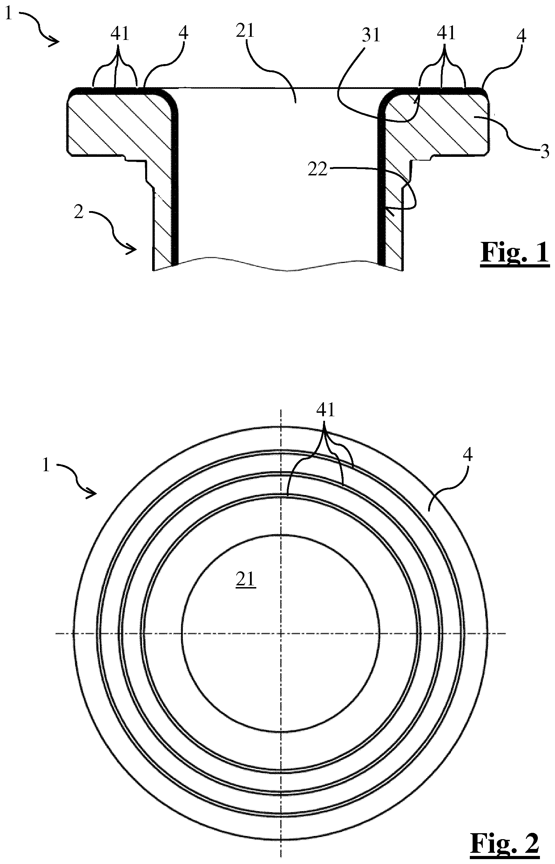

Wie aus den Figuren 1 und 2 ersichtlich, umfasst ein erfindungsgemässes Bauteil 1 einen Rohrabschnitt 2, welcher an seinem Ende einen Bund 3 aufweist. Der Bund 3 umfasst eine in Fig. 1 nach oben gerichtete Stirnfläche 31, welche mit Email 4 bedeckt ist. Das Email 4 bedeckt auch eine Innenseite 22 des Rohrabschnitts 2, kann sich bei anderen Ausführungsvarianten aber auch nur über einen Teil der Innenseite erstrecken.

Das Email 4 umfasst im Allgemeinen mehrere Emailschichten, die hier nicht einzeln dargestellt sind. Mit Vorteil umfasst das Email 4 mindestens eine Grundemailschicht und mindestens eine auf der Grundemailschicht ausgebildete Deckemailschicht. Vorzugsweise umfasst das Email 4 ein bis zwei Grundemailschichten und vier bis sechs Deckemailschichten. Alternativ ist es aber auch möglich, das Email 4 aus nur einer einzigen Emailschicht zu bilden.

In der dargestellten Ausführungsform weist das Email 4 im Bereich der Stirnfläche 31 des Bunds 3 drei konzentrische, um eine Öffnung 21 des Rohrabschnitts 2 herum verlaufende Vertiefungen 41 auf.

Andere Ausführungsformen können auch nur eine Vertiefung 41, zwei Vertiefungen 41 oder aber auch mehr als drei Vertiefungen 41 besitzen. Die Vertiefungen 41 können auch nicht konzentrisch um die Öffnung 21 herum verlaufen.

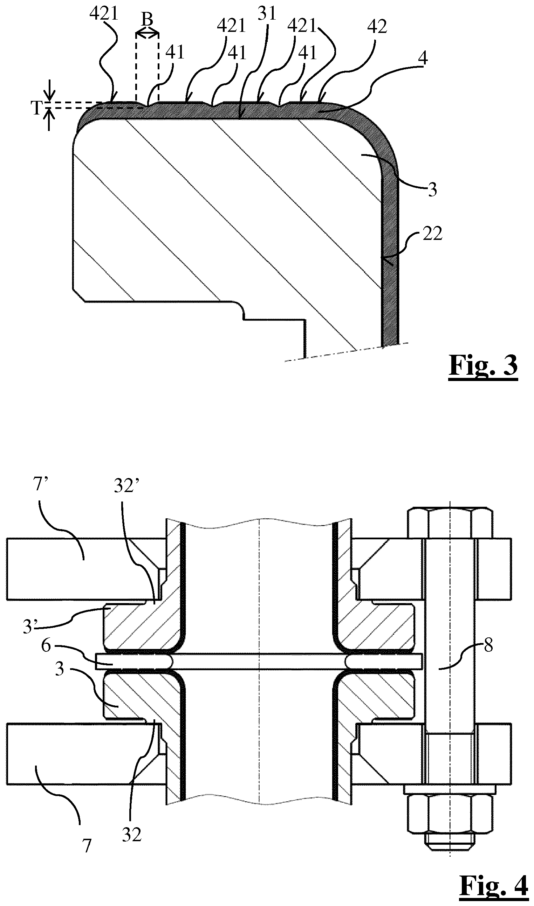

In Fig. 3 ist die Tiefe der Vertiefungen 41 mit T bezeichnet, während deren entlang der Oberfläche des Emails 4, welche sich parallel zur Stirnfläche 31 des Bunds 3 erstreckt, gemessene Breite mit B bezeichnet ist. Die Vertiefungen 41 sind bevorzugt in der äussersten Emailschicht ausgebildet und die Tiefe T entspricht vorzugsweise der halben bis ganzen Dicke der äussersten Emailschicht und liegt vorzugsweise zwischen 0,1 mm und 0,3 mm. Die Breite jeder Vertiefung 41 liegt mit Vorteil zwischen 0,2 mm und 1 mm, vorzugsweise zwischen 0,3 mm und 0,6 mm. Die Vertiefungen 41 besitzen einen V-förmigen bis U-förmigen Querschnitt.

Das Email 4 weist eine Kontaktfläche 42 auf, welche durch die Vertiefungen 41 in vier Teilkontaktflächen 421 unterteilt ist und dazu bestimmt ist, an einem Dichtelement anzuliegen. Die Teilkontaktflächen 421 weisen bei gleicher Anpresskraft zwischen Bund 3 und Dichtelement einen höheren Anpressdruck an das Dichtelement auf, als eine Kontaktfläche ohne Vertiefungen 41 haben würde, da ihre gesamte Fläche wegen der Lücken aufgrund der Vertiefungen 41 kleiner ist. Dadurch werden die Dichteigenschaften verbessert.

Fig. 4 zeigt zwei Rohrabschnitte mit Bunden 3, 3', die mittels zweier Losflansche 7 und 7' miteinander verbunden sind. Zwischen den beiden Bunden 3, 3' ist ein ringförmiges Dichtelement 6 angeordnet, welches an den Kontaktflächen 42 bzw. Teilkontaktflächen 421 des Emails 4 anliegt. Das Dichtelement 6 erstreckt sich mindestens über alle vorhandenen Vertiefungen 41 und ist zum Beispiel ein Dichtring aus PTFE.

Die beiden mittels Verbindungsschrauben 8 verbundenen Losflansche 7 und 7' setzen an Ringschultern 32 bzw. 32' an den Rückseiten der beiden Bunde 3, 3' an und pressen diese gegeneinander. Dadurch werden die Kontaktflächen 42 bzw. Teilkontaktflächen 421 des Emails 4 an das Dichtelement 6 gedrückt, wodurch eine dichte Verbindung zwischen den zwei Bunden 3, 3' entsteht.

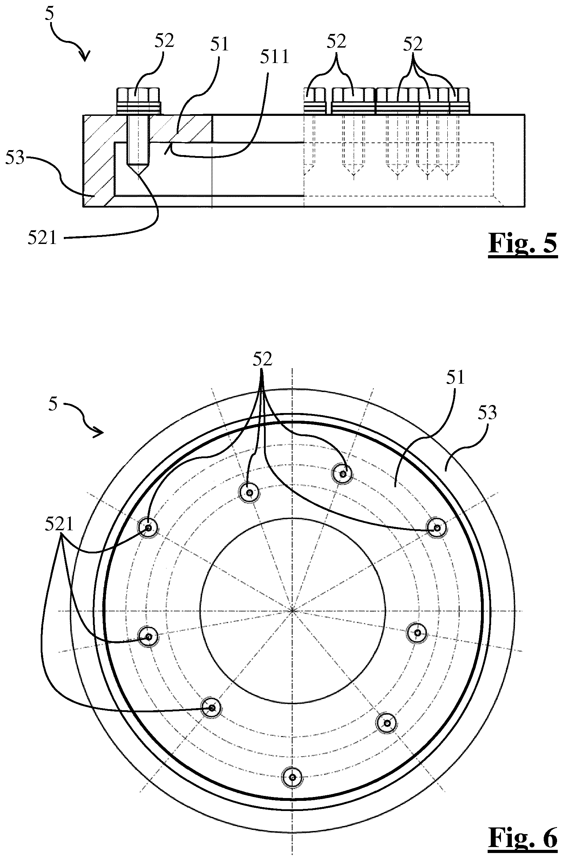

In den Figuren 5 und 6 ist ein Vertiefungswerkzeug 5 dargestellt, das eine Platte 51 umfasst, an welcher neun Stifte 52 angebracht sind. Die Stifte 52 weisen jeweils eine Spitze 521 auf, welche von einer Innenfläche 511 der Platte 51 weg in eine Vertiefungsrichtung gerichtet sind und von der Innenfläche 511 einen bestimmten Abstand aufweisen. Die Stifte 52 sind im vorliegenden Fall Schrauben, welche durch die Platte 51 geschraubt sind. Alternativ können die Stifte 52 auch federnd an der Platte 51 gelagert sein.

Die Platte 51 umfasst des Weiteren ein Führungselement 53 in Form eines Kragens, welches dazu bestimmt ist, während einer Rotation des Vertiefungswerkzeugs 5 am Bauteil 1 anzuliegen. Das kragenförmige Führungselement 53 erstreckt sich in Vertiefungsrichtung weiter von der Innenfläche 511 der Platte 51 weg als die Spitzen 521. Es wird während der Rotation des Vertiefungswerkzeugs 5 von einem Aussenrand des Bunds 3 geführt, so dass die Vertiefungen 41 exakt ausgebildet werden können.

Anstatt durch einen umlaufenden Kragen könnte das Führungselement beispielsweise alternativ auch aus drei an der Platte 51 angebrachten Stiften geformt sein und es könnte während der Rotation anstelle des Aussenrands auch von einem Innenrand des Bunds 3 geführt werden.

Die Stifte 52 sind dazu bestimmt, mit ihren Spitzen 521 die Vertiefungen 41 im Email 4 auszubilden.

Nachfolgend werden nun Ausführungsformen des erfindungsgemässen Verfahrens beschrieben.

Zunächst werden auf der Stirnfläche 31 des Bunds 3 des Rohrabschnitts 2 des Bauteils 1 und gleichzeitig auf mindestens einem Teil der Innenseite 22 des Rohrabschnitts 2 mehrere Emailschichten aufgebracht. Hierzu wird jeweils eine Emailschlicker-Schicht aufgetragen, welche anschliessend getrocknet und dann gebrannt wird.

Gemäss einer ersten Ausführungsform des erfindungsgemässen Verfahrens wird dann für die äusserste Emailschicht wiederum eine Emailschlicker-Schicht aufgetragen und getrocknet. Danach wird mittels des Vertiefungswerkzeugs 5 in der getrockneten Emailschlicker-Schicht mindestens eine Basis-Vertiefung erzeugt. Die mindestens eine Basis-Vertiefung besitzt eine Tiefe T zwischen 0,1 mm und 0,3 mm bzw. zwischen einer halben bis ganzen Dicke der getrockneten Emailschlicker-Schicht. Anschliessend wird die Emailschlicker-Schicht, welche nun mindestens eine Basis-Vertiefung aufweist, gebrannt.

Gemäss einer zweiten Ausführungsform des erfindungsgemässen Verfahrens wird das Bauteil 1 zunächst mit einer Emailbeschichtung versehen, dann in der Emailbeschichtung eine Basis-Vertiefung erzeugt und schliesslich die Emailbeschichtung mit der Basis-Vertiefung gebrannt. Im Unterschied zur ersten Ausführungsform wird also die Basis-Vertiefung in der einer bereits gebrannten Emailbeschichtung erzeugt und danach wird nochmals ein Brennvorgang durchgeführt.

Das Erzeugen der mindestens einen Basis-Vertiefung geschieht jeweils durch Rotation des Vertiefungswerkzeugs 5, welches mit den Spitzen 521 der Stifte 52 in die Emailschlicker-Schicht bzw. in die Emailbeschichtung eindringt. Alternativ kann auch das Bauteil rotiert werden.

Während der Rotation des Vertiefungswerkzeugs 5 bzw. des Bauteils 1 liegt das Führungselement 53 am Bauteil 1 an, zum Beispiel an einer Aussenseite oder Innenseite des Bunds 3.

Alternativ könnte anstelle des dargestellten Vertiefungswerkzeugs 5 ein Laser oder ein anderes mechanisches Material-Abtragungs-Gerät verwendet werden.

## Patentansprüche

1. Bauteil (1) mit mindestens einem Rohrabschnitt (2), welcher an seinem Ende einen Bund (3) umfasst, wobei der Bund (3) um eine Öffnung (21) des Rohrabschnitts (2) herum eine Stirnfläche (31) aufweist, welche mit Email (4) bedeckt ist, **dadurch gekennzeichnet, dass** das Email (4) mindestens eine durchgehende, um die Öffnung (21) herum verlaufende Vertiefung (41) aufweist.

2. Bauteil nach Anspruch 1, **dadurch gekennzeichnet, dass** das Email (4) mindestens zwei konzentrische, um die Öffnung (21) herum verlaufende Vertiefungen (41) aufweist.

3. Bauteil nach Anspruch 1 oder 2, **dadurch gekennzeichnet, dass** die mindestens eine Vertiefung (41) eine Tiefe (T) zwischen 0,1 mm und 0,3 mm besitzt.

4. Bauteil nach einem der Ansprüche 1 bis 3, **dadurch gekennzeichnet, dass** das Email (4) mehrere Emailschichten umfasst und die mindestens eine Vertiefung (41) in der äussersten Emailschicht ausgebildet ist und eine Tiefe (T) besitzt, welche einer halben bis ganzen Dicke der äussersten Emailschicht entspricht.

5. Bauteil nach einem der Ansprüche 1 bis 4, **dadurch gekennzeichnet, dass** der Rohrabschnitt (2) eine Innenseite (22) aufweist und das Email (4) auch mindestens einen Teil dieser Innenseite (22) bedeckt.

6. Verfahren zur Herstellung von mindestens einem emaillierten Bund (3) bei einem Bauteil (1), welches mindestens einen Rohrabschnitt (2) mit einem Bund (3) an seinem Ende umfasst, wobei der Bund (3) um eine Öffnung (21) des Rohrabschnitts (2) herum eine Stirnfläche (31) aufweist, welche mit einem Email (4) versehen wird, **dadurch gekennzeichnet, dass** das Email (4) mit mindestens einer durchgehenden, um die Öffnung (21) herum verlaufenden Vertiefung (41) ausgebildet wird.

7. Verfahren nach Anspruch 6, **dadurch gekennzeichnet, dass** das Email (4) mehrere Emailschichten umfasst und die mindestens eine Vertiefung (41) in der äussersten Emailschicht ausgebildet wird.

8. Verfahren nach Anspruch 7, **dadurch gekennzeichnet, dass** zum Erzeugen der äussersten Emailschicht mit Vertiefung (41) eine Emailschlicker-Schicht aufgetragen und getrocknet wird, dann in der getrockneten Emailschlicker-Schicht mindestens eine Basis-Vertiefung geformt wird und schliesslich die Emailschlicker-Schicht eingebrannt wird.

9. Verfahren nach Anspruch 6, **dadurch gekennzeichnet, dass** der Bund (3) zunächst mit einer Emailbeschichtung versehen wird, danach in der Emailbeschichtung mindestens eine Basis-Vertiefung erzeugt wird und schliesslich die Emailbeschichtung gebrannt wird.

10. Verfahren nach einem der Ansprüche 6 bis 9, **dadurch gekennzeichnet, dass** die mindestens eine Basis-Vertiefung durch Rotation eines Vertiefungswerkzeugs (5) erzeugt wird, welches eine Platte (51) mit mindestens einem an der Platte angebrachten Stift (52) umfasst.

11. Verfahren nach Anspruch 10, **dadurch gekennzeichnet, dass** der mindestens eine Stift (52) federnd gelagert ist.

12. Verfahren nach Anspruch 10 oder 11, **dadurch gekennzeichnet, dass** das Vertiefungswerkzeug (5) ein Führungselement (53) umfasst, das während der Rotation am Bauteil (1) anliegt.

13. Verfahren nach einem der Ansprüche 6 bis 12, **dadurch gekennzeichnet, dass** die mindestens eine Basis-Vertiefung durch einen Laser oder ein mechanisches Material-Abtragungs-Gerät erzeugt wird.

## Claims

1. Component (1) having at least one tube portion (2) which comprises a flange (3) at its end, wherein the flange (3) has an end face (31) around an opening (21) of the tube portion (2), which end face is covered with enamel (4), **characterised in that** the enamel (4) has at least one continuous depression (41) running around the opening (21).

2. Component according to claim 1, **characterised in that** the enamel (4) has at least two concentric depressions (41) running around the opening (21).

3. Component according to claim 1 or 2, **characterised in that** the at least one depression (41) has a depth (T) of between 0.1 mm and 0.3 mm.

4. Component according to any one of claims 1 to 3, **characterised in that** the enamel (4) comprises a plurality of enamel layers and the at least one depression (41) is formed in the outermost enamel layer and has a depth (T) which corresponds to from half the thickness to the full thickness of the outermost enamel layer.

5. Component according to any one of claims 1 to 4, **characterised in that** the tube portion (2) has an inner side (22) and the enamel (4) also covers at least a portion of that inner side (22).

6. Method for producing at least one enamelled flange (3) in a component (1) which comprises at least one tube portion (2) having a flange (3) at its end, wherein the flange (3) has an end face (31) around an opening (21) of the tube portion (2), which end face (31) is provided with an enamel (4), **characterised in that** the enamel (4) is formed with at least one continuous depression (41) running around the opening (21) .

7. Method according to claim 6, **characterised in that** the enamel (4) comprises a plurality of enamel layers and the at least one depression (41) is formed in the outermost enamel layer.

8. Method according to claim 7, **characterised in that**, for producing the outermost enamel layer with the depression (41), an enamel slip layer is applied and dried, then at least one base depression is formed in the dried enamel slip layer, and finally the enamel slip layer is baked.

9. Method according to claim 6, **characterised in that** the flange (3) is first provided with an enamel coating, then at least one base depression is produced in the enamel coating, and finally the enamel coating is baked.

10. Method according to any one of claims 6 to 9, **characterised in that** the at least one base depression is produced by rotation of a depression-forming tool (5) which comprises a plate (51) having at least one pin (52) attached to the plate.

11. Method according to claim 10, **characterised in that** the at least one pin (52) is spring-mounted.

12. Method according to claim 10 or 11, **characterised in that** the depression-forming tool (5) comprises a guide element (53) which rests against the component (1) during the rotation.

13. Method according to any one of claims 6 to 12, **characterised in that** the at least one base depression is produced by a laser or a mechanical material-removing device.

## Revendications

1. Composant (1) pourvu d'au moins une section de tube (2) qui comprend une collerette (3) à son extrémité, la collerette (3) présentant autour d'une ouverture (21) de la section de tube (2) une surface frontale (31) qui est revêtue d'émail (4), **caractérisé en ce que** l'émail (4) présente au moins un renfoncement (41) continu s'étendant autour de l'ouverture (21).

2. Composant selon la revendication 1, **caractérisé en ce que** l'émail (4) présente au moins deux renfoncements (41) concentriques s'étendant autour de l'ouverture (21).

3. Composant selon la revendication 1 ou 2, **caractérisé en ce que** ledit au moins un renfoncement (41) a une profondeur (T) entre 0,1 mm et 0,3 mm.

4. Composant selon l'une des revendications 1 à 3, **caractérisé en ce que** l'émail (4) comprend plusieurs couches d'émail et ledit au moins un renfoncement (41) est réalisé dans la couche d'émail la plus extérieure et a une profondeur (T) qui correspond à une épaisseur comprise entre la moitié et la totalité de l'épaisseur de la couche d'émail la plus extérieure.

5. Composant selon l'une des revendications 1 à 4, **caractérisé en ce que** la section de tube (2) présente une face intérieure (22), et l'émail (4) recouvre également au moins une partie de cette face intérieure (22).

6. Procédé de réalisation d'au moins une collerette émaillée (3) d'un composant (1) qui comprend au moins une section de tube (2) pourvu d'une collerette (3) à son extrémité, la collerette (3) présentant autour d'une ouverture (21) de la section de tube (2) une surface frontale (31) qui est pourvue d'un émail (4), **caractérisé en ce que** l'émail (4) est réalisé avec au moins un renfoncement (41) continu s'étendant autour de l'ouverture (21).

7. Procédé selon la revendication 6, **caractérisé en ce que** l'émail (4) comprend plusieurs couches d'émail et ledit au moins un renfoncement (41) est réalisé dans la couche d'émail la plus extérieure.

8. Procédé selon la revendication 7, **caractérisé en ce que**, pour réaliser la couche d'émail la plus extérieure avec renfoncement (41), on applique et on sèche une couche de barbotine d'émail, puis on forme dans la couche de barbotine d'émail séchée au moins un renfoncement de base, et enfin on fait cuire la couche de barbotine d'émail.

9. Procédé selon la revendication 6, **caractérisé en ce qu'**on dote tout d'abord la collerette (3) d'un revêtement d'émail, puis on produit dans le revêtement d'émail au moins un renfoncement de base, et enfin on fait cuire le revêtement d'émail.

10. Procédé selon l'une des revendications 6 à 9, **caractérisé en ce qu'**on produit ledit au moins un renfoncement de base par rotation d'un outil à renfoncement (5) qui comprend une plaque (51) avec au moins une tige (52) rapportée sur la plaque.

11. Procédé selon la revendication 10, **caractérisé en ce que** ladite au moins une tige (52) est montée avec effet élastique.

12. Procédé selon la revendication 10 ou 11, **caractérisé en ce que** l'outil de renfoncement (5) comprend un élément de guidage (53) qui est en contact avec le composant (1) pendant la rotation.

13. Procédé selon l'une des revendications 6 à 12, **caractérisé en ce qu'**on produit ledit au moins un renfoncement de base par un laser ou un appareil mécanique d'enlèvement de matière.
